# EUROPÄISCHE PATENTSCHRIFT

(11) **EP 2 952 752 B1**
(45) Veröffentlichungstag und Bekanntmachung des Hinweises auf die Patenterteilung: **24.06.2020**
(21) Anmeldenummer: 14171322.2
(22) Anmeldetag: 05.06.2014
(51) Int. Cl.: F15D 1/04, G05D 7/06, E03C 1/122

(54) **Umlenkbogen**
Deflection bend
Arc de déflexion

(43) Veröffentlichungstag der Anmeldung: 09.12.2015
(73) Patentinhaber: Geberit International AG, 8645 Jona (CH)
(72) Erfinder: Oengören, Abdullah, 8370 Sirnach (CH); Weiss, Rolf, 8632 Tann (CH)
(74) Vertreter: Frischknecht, Harry Ralph

(56) Entgegenhaltungen:
- EP-A1- 1 882 786
- WO-A1-95/25897
- CA-A1- 2 563 969
- CN-A- 102 042 454
- CN-A- 103 205 999

## Beschreibung

### TECHNISCHES GEBIET

Die vorliegende Erfindung betrifft einen Umlenkbogen für eine Fallleitung zum Abführen eines mehrphasigen Strömungsmediums, insbesondere Wasser, Feststoffen und Luft.

### STAND DER TECHNIK

Fallleitungen dienen dem Wegführen von Abwasser und sind in Gebäuden meist in der Vertikalen verlaufend angeordnet. In vielen Fallleitungen gibt es aber auch Abschnitte, welche in der Horizontalen oder leicht geneigt zur Horizontalen, beispielsweise mit einem Winkel von einigen Grad, verlaufen. Der vertikal verlaufende Abschnitt steht für die Umlenkung von der Vertikalen in die Horizontale über einen Umlenkbogen mit dem horizontal verlaufenden Abschnitt in Verbindung.

Ein derartiger Umlenkbogen ist beispielsweise aus der EP 1 882 786 bekannt geworden. Auch offenbart die CA 2 563 969 einen Umlenkbogen, sowie die CN 103 205 999 A und die CN 102 042 454 A.

Der Übergang zwischen einem vertikal verlaufenden Abschnitt und einem horizontal verlaufenden Abschnitt ist dabei vorzugsweise so ausgebildet, dass das Abwasser mit möglichst wenig Verlust umgelenkt wird. Hierdurch gelangt das Abwasser immer noch mit einer grossen Energie in den horizontal verlaufenden Abschnitt, so dass das Abwasser möglichst über eine grosse Distanz durch den horizontal verlaufenden Abschnitt fliessen kann. Man ist in der Praxis dazu übergegangen, zwei 45°-Bogen, welche über ein gerades Rohrstück miteinander in Verbindung stehen, vorzusehen. Dabei konnte man die hydraulischen Verluste reduzieren. Allerdings weist diese Lösung den Nachteil auf, dass viel Einbauraum benötigt wird.

### DARSTELLUNG DER ERFINDUNG

Ausgehend von diesem Stand der Technik liegt der Erfindung eine Aufgabe zugrunde, ein Umlenkbogen anzugeben, welcher den Strömungsverlust möglichst klein hält. Insbesondere soll eine gute Ausspülleistung erreicht werden. Eine weitere Aufgabe ist es, ein Umlenkbogen anzugeben, dessen benötigten Platzverhältnisse kleiner sind.

Diese Aufgabe löst der Gegenstand vom Anspruch 1. Der Umlenkbogen für eine Fallleitung zum Abführen eines mehrphasigen Strömungsmediums, insbesondere aus Wasser, Feststoffen und Luft, umfasst einen ersten Rohrabschnitt, der sich entlang einer ersten Mittelachse erstreckt, einen sich an diesen ersten Rohrabschnitt anschliessenden Kurvenabschnitt mit einer Kurvenaussenseite und einer Kurveninnenseite, und einen sich dem Kurvenabschnitt anschliessenden zweiten Rohrabschnitt, der sich entlang einer zweiten Mittelachse erstreckt. Der Kurvenabschnitt erstreckt sich entlang einer gekrümmten Mittellinie. Weiter umfasst der Umlenkbogen ein innenseitig bzw. rohrinnenseitig auf der Kurvenaussenseite angeordnetes Führungselement, durch welches die Querschnittsform des Kurvenabschnittes derart verändert ist, dass eine Bewegung des Strömungsmediums, insbesondere des Wassers und der Feststoffe, quer zur Fliessrichtung unterdrückbar, insbesondere verhinderbar, ist. Das Führungselement ist im Innenraum des Umlenkbogens angeordnet und kommt mit dem Strömungsmedium in Kontakt.

Durch das Führungselement wird ein Aufschwappen des Strömungsmediums entlang der Rohrwand quer zur Fliessrichtung verhindert, wodurch die Leistung des Umlenkbogens und somit auch die Ausspülleistung verbessert werden kann. Folglich kann also eine am zweiten Rohrabschnitt angeschlossene in der Horizontalen liegende Rohrleitung länger ausgebildet werden. Darüber hinaus kann der Umlenkbogen bei verbesserter Leistung mit einem engeren Radius ausgebildet werden. Die ideale Umlenkung sorgt zudem dafür, dass die Luft neben dem Wasser frei zirkulieren kann und allfällige Druckpotentiale ausgleichen kann. Dadurch kann beispielsweise eine Umlüftungsleitung weggelassen werden.

Das Führungselement ist ausschliesslich auf der Kurvenaussenseite und nicht auf der Kurveninnenseite angeordnet. Die Kurvenaussenseite ist die Seite des Kurvenabschnittes, welche den grössten Kurvenradius aufweist, und die Kurveninnenseite ist die Seite des Kurvenabschnittes, welche den kleinsten Kurvenradius aufweist.

Die zweite Mittelachse steht winklig geneigt zur ersten Mittelachse. Der Winkel zwischen der ersten und der zweiten Mittelachse ist zwischen 91° bis 95°.

Das Führungselement ist mindestens eine im Bereich des Kurvenabschnittes angeordnete Führungswand, wobei die Führungswand im Wesentlichen in Fliessrichtung orientiert ist. Die Führungswand erstreckt sich in den Querschnitt des Kurvenabschnittes hinein und stellt im Bereich der Kurvenaussenseite ein Hindernis für das Strömungsmedium gegen die besagte Querbewegung bereit.

Das Führungselement bzw. die Führungswand erstreckt sich vollständig über den Kurvenabschnitt. Das heisst, dass das Führungselement bzw. die Führungswand im Wesentlichen eine Länge aufweist, welche derjenigen des Kurvenabschnittes entspricht.

Weiter ist im ersten Rohrabschnitt an der Innenseite ein Strömungsteiler angeordnet, der die Filmströmung des Strömungsmediums, insbesondere des Wassers, aufreisst. Hierdurch wird sichergestellt, dass das Strömungsmedium hydraulisch gut auf das Führungselement auftrifft.

Unabhängig von der Länge des Führungselementes bzw. der Führungswand innerhalb des Kurvenabschnittes, kann sich das Führungselement bzw. die Führungswand in einen oder in beide Rohrabschnitte hinein erstrecken. Besonders bevorzugt ist das Führungselement bzw. die Führungswand so angeordnet, dass sich diese von Kurvenabschnitt in den zweiten Rohrabschnitt hinein erstreckt.

Vorzugsweise sind genau zwei der besagten Führungswände beabstandet zueinander angeordnet. Das Strömungsmedium wird dann zwischen den beiden Führungswänden geführt oder umfliesst die beiden Führungswände.

Vorzugsweise weisen in Fliessrichtung gesehen die beiden Führungswände einen Einlassbereich auf, in welchem der Abstand zwischen den Führungswänden in Fliessrichtung gesehen verengt wird. Der Einlassbereich kann somit strömungstechnisch optimiert ausgebildet sein, so dass der Einlass, insbesondere zwischen die beiden Führungswände einen geringen hydraulischen Widerstand aufweisen.

Die beiden Führungswände weisen bevorzugt einen Führungsbereich auf, in welchem der Abstand zwischen den Führungswänden konstant ist. Der Führungsbereich schliesst sich vorzugsweise dem besagten Einlassbereich an.

Die beiden Führungswände weisen bevorzugt einen Auslassbereich auf, in welchem der Abstand in Fliessrichtung gesehen vergrössert wird. Durch diese Ausbildung des Auslassbereiches kann dessen hydraulischer Widerstand ebenfalls verringert werden. Der Auslassbereich schliesst sich bevorzugt den Führungsbereich an.

Bei einer besonders bevorzugten Ausführungsform umfassen die beiden beabstandet zueinander angeordneten Führungswände den besagten Einlassbereich, welcher vom besagten Führungsbereich gefolgt wird. Dem Führungsbereich schliesst sich sodann der besagte Auslassbereich an.

Vorzugsweise liegt die mindestens eine Führungswand mindestens abschnittsweise, insbesondere im Führungsbereich, parallel zu einer Ebene, welche durch die erste Mittelachse und die zweite Mittelachse verläuft.

Besonders bevorzugt wird die Führungswand durch eine Einbuchtung von aussen im Bereich der Kurvenaussenseite bereitgestellt. Die Einbuchtung liegt vorzugsweise beidseitig bezüglich einer Ebene, welche durch die erste Mittelachse und die zweite Mittelachse verläuft.

Besonders bevorzugt bilden die besagten beabstandet zueinander liegenden Führungswände einen Kanal, wobei der Kanal einen Kanalgrund aufweist, von welchem die Führungswände sich in Richtung der Kurveninnenseite erstrecken. Der Kanal ist gegenüber des Kanalgrunds in Richtung Kurveninnenseite offen. Bezüglich der Rohrinnenseite des Bogenabschnittes gesehen erstreckt sich der Kanal mit den beiden beabstandet zueinander liegenden Führungswänden nach aussen.

Vorzugsweise vergrössert sich die Kanaltiefe über die Länge des Kanals in einem Einlassbereich in Fliessrichtung gesehen. In einem Auslassbereich verkleinert sich die Kanaltiefe in Fliessrichtung gesehen. Die Kanaltiefe entspricht vorzugsweise 10% bis 50% des Rohrdurchmessers. Besonders bevorzugt entspricht die Kanaltiefe etwa 35% des Rohrdurchmessers. Bei einem beispielhaften Rohrdurchmesser von 100 mm liegt die Kanaltiefe also im Bereich von 10 mm bis 50 mm, besonders bevorzugt bei 35 mm.

Vorzugsweise verkleinert sich die Kanalquerschnittsfläche in Fliessrichtung gesehen in einem Einlassbereich und vergrössert sich in Fliessrichtung im Auslassbereich.

Besonders bevorzugt sind die Kanaltiefe und/oder der Kanalquerschnitt in einem Führungsbereich, insbesondere zwischen Einlassbereich und Auslassbereich, konstant.

Vorzugsweise ist der Kanalgrund im Querschnitt zur Mittellinie des Kurvenabschnittes gesehen konkav gekrümmt ausgebildet. Der Radius der besagten konkaven Krümmung ist vorzugsweise grösser als der Radius der gegenüberliegenden Wand der Kurveninnenseite.

In einer bevorzugten Ausführungsform aller Weiterbildungen ist der Kurvenabschnitt auf der Kurveninnenseite mit einer Aufweitung ausgebildet, mit welcher Aufweitung eine allfällige Querschnittsveränderung aufgrund des Führungselementes kompensierbar ist.

Besonders bevorzugt ist die Querschnittsfläche rechtwinklig zur Mittellinie des Umlenkbogens über die gesamte Länge des Umlenkbogens konstant.

Besonders bevorzugt weisen der erste Rohrabschnitt und/oder der zweite Rohrabschnitt einen kreiszylindrischen Querschnitt auf.

Vorzugsweise weist die Mittellinie des Kurvenabschnittes einen variablen Radius auf, wobei sich der Radius zwischen dem ersten Rohrabschnitt und dem zweiten Rohrabschnitt kontinuierlich vergrössert. Alternativ weist die Mittellinie des Kurvenabschnittes einen konstanten Radius auf.

Der Umlenkbogen, also der erste Rohrabschnitt, der Kurvenabschnitt und der zweite Rohrabschnitt sowie das Führungselement sind einstückig ausgebildet. Besonders bevorzugt ist der Umlenkbogen 1 aus Kunststoff hergestellt.

Besonders bevorzugt ist der Strömungsteiler als Erhebung von der Innenwand des ersten Rohrabschnittes ausgebildet.

Vorzugsweise ist der Strömungsteiler gegenüberliegend zur Kurvenaussenseite angeordnet, so dass das Strömungsmedium von der Kurveninnenseite auf die Kurvenaussenseite und dem dort angeordneten Führungselement zuleitbar ist.

Vorzugsweise weist der Strömungsteiler im Wesentlichen die Form eines umgekehrten V oder die Oberkante einer Mitra auf.

Vorzugsweise ist der Strömungsteiler an einer Wandung angeformt. Vorzugsweise weist der Strömungsteiler eine radiale Dicke auf, welche im Wesentlichen der Dicke der Filmströmung entspricht, wobei diese Dicke vorzugsweise kleiner als etwa 2 cm ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines erfindungsgemässen Umlenkbogens nach einer ersten Ausführungsform ohne Strömungsmedium;
- Fig. 2: eine perspektivische Ansicht des Umlenkbogens nach Figur 1 mit Strömungsmedium;
- Fig. 3: eine Frontansicht des Umlenkbogens nach den vorhergehenden Figuren;
- Fig. 4: eine Seitenansicht des Umlenkbogens nach den vorhergehenden Figuren;
- Fig. 5: eine Schnittansicht durch die Mittellinie des Umlenkbogens nach den vorhergehenden Figuren;
- Fig. 6: eine perspektivische Detailansicht des Umlenkbogens nach den vorhergehenden Figuren; und
- Fig. 7, 7a-7e: eine Seitenansicht des Umlenkbogens nach den vorhergehenden Figuren mit dazugehörigen Schnittdarstellungen.

### BESCHREIBUNG BEVORZUGTER AUSFÜHRUNGSFORMEN

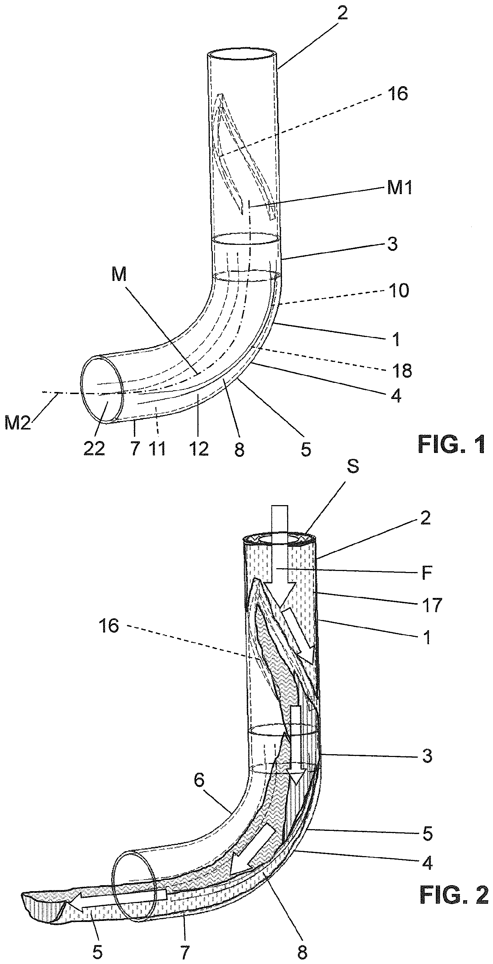

In der Figur 1 wird ein Umlenkbogen 1 für eine Fallleitung 2 zum Abführen eines mehrphasigen Strömungsmediums S gezeigt. Von der Fallleitung 2 wird ein kleiner Abschnitt im oberen Bereich des Umlenkbogens 1 dargestellt. Die Fallleitung 2 wird mit dem Umlenkbogen 1 verbunden. Unter einem mehrphasigen Strömungsmedium S wird ein Strömungsmedium verstanden, welches insbesondere aus Wasser, Feststoffen und Luft besteht. Das Strömungsmedium S fliesst, wie in der Figur 2 gezeigt, im Bereich der Fallleitung 2 und beim Eingang in den Umlenkbogen 1 als Wandströmung ab. Das Wasser und die Feststoffe fliessen im Wesentlichen entlang der Innenwand 17 der Fallleitung 2 und in der Mitte wird ein Luftkern gebildet. Die Fliessrichtung wird in der Figur 2 mit F angegeben.

Der Umlenkbogen 1 umfasst einen ersten Rohrabschnitt 3, der sich entlang einer ersten Mittelachse M1 erstreckt, einen sich diesen ersten Rohrabschnitt 3 anschliessenden Kurvenabschnitt 4 mit einer Kurvenaussenseite 5 und Kurveninnenseite 6 und einen sich dem Kurvenabschnitt 4 anschliessenden zweiten Rohrabschnitt 7, der sich entlang einer zweiten Mittelachse M2 erstreckt. Der Kurvenabschnitt 4 erstreckt sich entlang einer gekrümmten Mittellinie M, welche mittig durch den Kurvenabschnitt 4 verläuft und geometrisch gesehen die erste Mittelachse M1 und die zweite Mittelachse M2 verbindet. Die erste Mittelachse M1 steht winklig geneigt zur zweiten Mittelachse M2. Der Winkel zwischen der ersten Mittelachse M1 und der zweiten Mittelachse M2 ist zwischen 91° bis 95°. Der erste Rohrabschnitt 3 wird an die Fallleitung 2 angeschlossen und der zweite Rohrabschnitt 7 steht in Verbindung mit einer Abführleitung. Die Fallleitung steht üblicherweise in der Vertikalen und die Abführleitung mit leichtem Gefälle von 1% bis 5% zur Horizontalen.

Im Inneren des Umlenkbogens 2, also innenseitig bzw. rohrinnenseitig, auf der Kurvenaussenseite 5, umfasst der Umlenkbogen 1 ein Führungselement 8. Das Führungselement 8 verändert die Querschnittsform des Kurvenabschnittes 4 derart, dass eine Bewegung des Strömungsmediums S, insbesondere des Wassers und der Feststoffe, quer zur Fliessrichtung F unterdrückbar ist. Besonders bevorzugt ist das Führungselement 8 derart ausgebildet, dass eine Bedienung des Strömungsmediums S quer zur Fliessrichtung verhinderbar ist. Mit anderen Worten gesagt wird eine Bewegung des Strömungsmediums S quer zur Mittellinie M des Kurvenabschnittes 4 unterdrückt bzw. verhindert. Durch das Verhindern des Aufschwappens des Strömungsmediums S quer zur Fliessrichtung wird der hydraulische Widerstand des Umlenkbogens verkleinert, was zu einer besseren Ausspülleistung führt. Das Strömungsmedium fliesst dadurch mit grösserer Energie in die Abführleitung.

Das Führungselement 8 ist auf der Kurvenaussenseite 5 im Innenraum 22, also rohrinnenseitig, des Umlenkbogens 1 angeordnet. Die Kurveninnenseite 6 ist im Innenraum 22 ohne spezielle Vorkehrungen als normale Oberfläche ausgebildet.

Der Umlenkbogen 1, also der erste Rohrabschnitt 3, der Kurvenabschnitt 4 und der zweite Rohrabschnitt 7 sowie das Führungselement 8 sind einstückig ausgebildet. Besonders bevorzugt ist der Umlenkbogen 1 aus Kunststoff hergestellt.

Das Führungselement 8 kann verschiedenartig ausgebildet sein. In den Figuren wird ein Führungselement in der Gestalt einer Führungswand 9 gezeigt. In einer alternativen, nicht gezeigten Ausführungsformen, umfasst das Führungselement 8 eine Mehrzahl innerhalb des Kurvenabschnittes auf der Kurvenaussenseite 5 beabstandet zueinander angeordnete Führungsbahnen. Das Führungselement 8, insbesondere die Führungswand 9 und die Führungsbahnen, sind im Wesentlichen in Fliessrichtung F orientiert. Das heisst, das Führungselement 8 erstreckt sich in Richtung der Mittellinie M, welche sich durch den Umlenkbogen, insbesondere durch den Kurvenabschnitt 4 hindurch erstreckt.

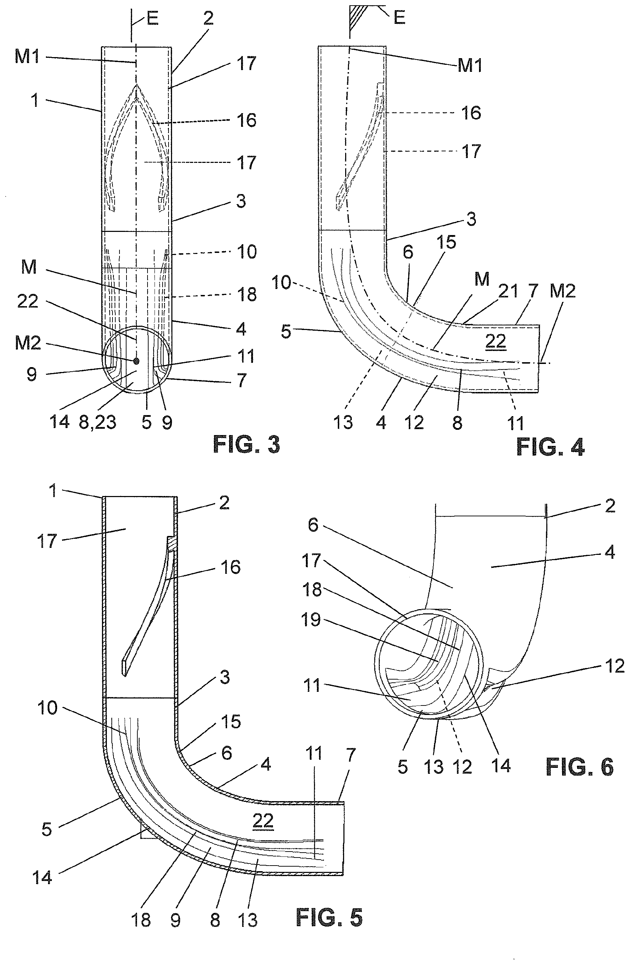

Anhand der Figuren 3 bis 6 wird nun eine bevorzugte Ausführungsform des Führungselementes 8 genauer erläutert. In der gezeigten Ausführungsform umfasst das Führungselement 8 zwei Führungswände 9, welche beabstandet zueinander angeordnet sind. Die Führungswände 9 erstrecken sich dabei vollständig über den Kurvenabschnitt 4 auf dessen Kurvenaussenseite 5. Das heisst, die Länge der Führungswand 9 entspricht im Wesentlichen der Länge des Kurvenabschnittes 4.

Die Führungswand 9 kann sich aber auch mindestens teilweise in den ersten Rohrabschnitt 3 und/oder den zweiten Rohrabschnitt 7 hinein erstrecken. In der vorliegend gezeigten Ausführungsform erstreckt sich die Führungswand 9 in den zweiten Rohrabschnitt 7 hinein.

Die Führungswände 9 sind, wie bereits oben erläutert, beabstandet zueinander angeordnet und bilden einen Zwischenraum 23 oder, wie dies weiter unten detaillierter ausgeführt ist, einen Kanal 13. Die Führungswände 9 weisen einen Einlassbereich 10 auf, in welchem der Querschnitt zwischen den Führungswänden 9 in Fliessrichtung gesehen verengt wird. Es handelt sich um einen strömungstechnisch optimierten Einlassbereich 10, dessen Querschnitt zwischen den Führungswänden 9 mit zunehmender Fliessrichtung abnimmt. In Fliessrichtung F gesehen folgt nach dem Einlassbereich 10 ein Führungsbereich 18 in dem die Führungswände 9 im Wesentlichen einen konstanten Abstand zueinander aufweisen und parallel zueinander verlaufen. Der Führungsbereich 18 kann aber, insbesondere was der parallele Verlauf der beiden Führungswände 9 betrifft, auch anders ausgebildet sein. Dem Führungsbereich 18 schliesst sich ein Auslassbereich 11 an, welcher sich hier dem Führungsbereich 18 anschliesst. Im Auslassbereich 11 wird der Querschnitt zwischen den Führungswänden 9 in Fliessrichtung F gesehen vergrössert. Es handelt sich ebenfalls um einen strömungstechnisch optimierten Auslassbereich 11.

Die Führungswände 9 liegen gleichmässige beabstandet zu einer Ebene E, welche durch die erste Mittelachse M1 und durch die zweite Mittelachse M2 hindurch verläuft. Die Ebene E wird in den Figuren 3 und 4 dargestellt. Der Abstand zwischen den beiden Führungswänden 9 zur Ebene E ist dabei identisch, sodass ein symmetrisches Führungselement 8 bestehend aus den beiden Führungswänden 9 geschaffen werden kann. Besonders bevorzugt stehen die Führungswände 9 parallel zur Ebene E.

Die Führungswand 9 bzw. die beiden Führungswände 9 können verschiedenartig ausgebildet sein. Beispielsweise wäre es denkbar, dass die Führungswände 9 als separates Element in den Kurvenabschnitt 4 eingesetzt werden. In den Figuren wird eine besonders bevorzugte Ausführungsform gezeigt, bei welcher die Führungswand 9 bzw. die beiden Führungswände 9 durch eine Einbuchtung 12 von aussen im Bereich der Kurvenaussenseite 5 bereitgestellt wird. Diese Einbuchtung 12 kann in der Figur 6 besonders gut erkannt werden. Bezüglich der besagten Ebene E, welche durch die erste Mittelachse M1 und durch die zweite Mittelachse M2 verläuft, wird die Einbuchtung 12 vorzugsweise auf beiden Seite der Ebene E angeordnet, so dass eben zwei Führungswände 9 angeordnet werden können. Die Einbuchtung 12 hat den Vorteil, dass bezüglich der Herstellung eine besonders bevorzugte Ausführung geschaffen wird und der Umlenkbogen durch ein vergleichsweise einfaches Kunststoff-Blasverfahren oder ein KunststoffSpritzverfahren hergestellt werden kann.

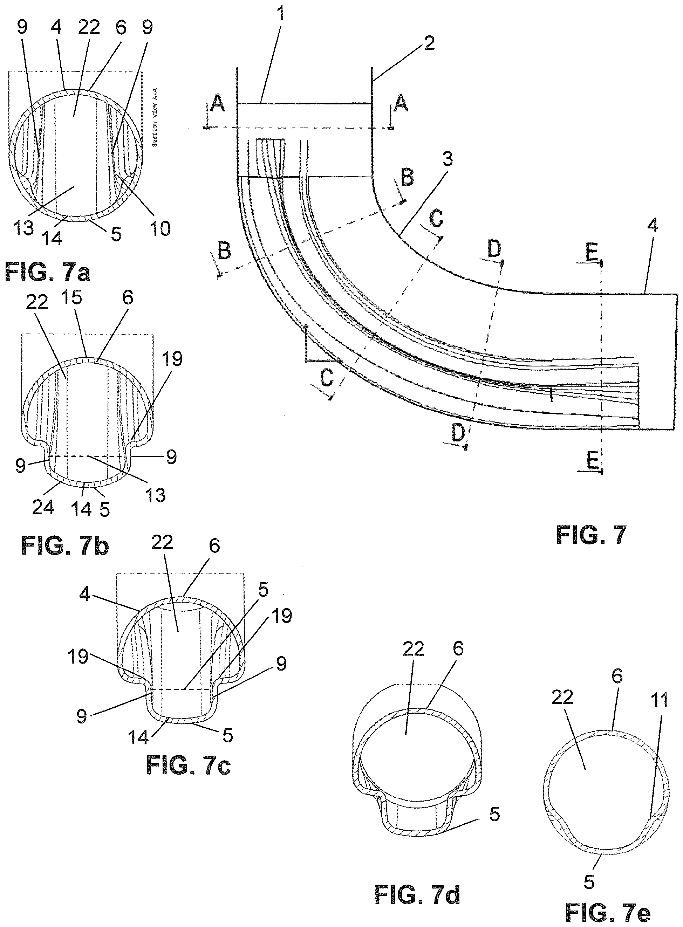

Anhand der Figur 7 mit den Schnittdarstellungen 7a bis 7b wird nun die Anordnung der besagten Führungswände 9 gemäss der bevorzugten Ausführungsform genauer erläutert.

In der Figur 7a, welche die Schnittdarstellung entlang der Schnittlinie A-A der Figur 7 ist, wird der Einlassbereich 10 gezeigt. Die Führungswände 9 sind im Einlassbereich 10 strömungstechnisch optimiert mit entsprechenden Einlaufformen, hier leicht gerundet, ausgebildet.

In der Figur 7b, welche die Schnittdarstellung entlang der Schnittlinie B-B der Figur 7 ist, wird ein erster Teil des Führungsbereichs 18 gezeigt, welcher sich dem Einlassbereich 10 anschliesst.

Die besagten Führungswände 9 bilden hier, insbesondere im Führungsbereich 18, einen Kanal 13. Der Kanal 13 wird seitlich durch die Führungswände 9 und nach unten hin durch einen Kanalgrund 14 begrenzt. Vom Kanalgrund 14 erstrecken sich die Führungswände 9 in Richtung der Kurveninnenseite 6. In Richtung der Kurveninnenseite 6 ist der Kanal 13 gegenüber des Kanalgrundes 14 offen. Das heisst also, dass das Strömungsmedium S, welches in der Figur 7b durch eine gestrichelte Linie dargestellt ist, im Wesentlichen im Kanal 13 fliesst. Durch die Führungswände 9 des Kanals 13 wird die Aufschwappbewegung quer zur Fliessrichtung F verhindert.

In der Figur 7c wird eine weitere Schnittdarstellung des Kurvenabschnittes 4 gezeigt. Der Kanal 13 ist im Querschnitt gesehen leicht kleiner geworden als an der Stelle der Figur 7b. In der Figur 7c wird ein Bereich des Führungsabschnittes 18 mit dem konstanten Abstand zwischen den Führungswänden 9 gezeigt.

In den Figuren 7d und 7e wird sodann gezeigt, dass die Führungswände 9 im Bereich des Auslassbereichs 11 wieder einen grösseren Abstand zueinander aufweisen. Der Abstand zwischen den Führungswänden 9 wird in Fliessrichtung F gesehen vergrössert. Hierdurch kann eine strömungstechnisch vorteilhafte Situation im Auslassbereich 11 geschaffen werden.

Bezüglich des Querschnittes ist nicht nur die Breite des Kanals 13, also der Abstand zwischen den Führungswänden 9 ein Einflussparameter, sondern auch die Tiefe des Kanals 13. Die Tiefe des Kanals 13 definiert sich vom Kanalgrund 14 bis hin zur Oberkante 19 der Führungswände 9. Vorzugsweise vergrössert sich die Tiefe des Kanals 13 über die Länge des Kanals 13 vom Einlassbereich 10 in Fliessrichtung F gesehen bis eine maximale Tiefe erreicht wird. Die Zunahme der Vertiefung wird in den Figuren 7a und 7b gezeigt. In der Figur 7c wird die maximale Tiefe des Kanals 13 gezeigt. Weiter verändert sich dann die Tiefe des Kanals 13 über die Länge des Kanals 13 im Auslassbereich 11 derart, dass die Tiefe des Kanals 13 ausgehend von der maximalen Tiefe verkleinert wird, so wie dies anhand der Figuren 7d und 7e gezeigt wird.

Der Abstand zwischen den beiden Führungswänden 9 des Kanals 13 und auch die Tiefe des Kanals 13 haben einen Einfluss auf die Kanalquerschnittsfläche, welche sich aus diesen beiden Grössen bestimmt. Die Kanalquerschnittsfläche vergrössert sich über Länge des Kanals 13 in einem Einlassbereich 10. Im Führungsbereich 18 wird die Kanalquerschnittsfläche vorzugsweise konstant gehalten. Im Auslassbereich 11 verkleinert sich dann die Kanalquerschnittsfläche erneut.

Der Kanalgrund 14 ist im Querschnitt zum Kurvenabschnitt 4 gesehen konkav gekrümmt ausgebildet. Die konkave Krümmung 24, welche in den Querschnittsfiguren 7a bis 7e gut erkannt werden kann, ist mindestens abschnittsweise grösser als der Radius der gegenüberliegenden Wand der Kurveninnenseite. Durch die konkave Krümmung 24 kann eine weitere strömungstechnische Optimierung erreicht werden.

Der Kurvenabschnitt 4 kann auf der Kurveninnenseite 6 mit einer Aufweitung 15 ausgebildet sein. Die Aufweitung 15 ist vorteilhaft, weil eine allfällige Querschnittsveränderung aufgrund des Führungselementes 8 kompensierbar ist. Hierdurch wird sichergestellt, dass der Gesamtquerschnitt durch den Kurvenabschnitt 4 bezüglich des Gesamtquerschnittes des ersten Rohrabschnittes 4 und des zweiten Rohrabschnittes 7 nicht verkleinert wird. Bezüglich der Querschnittsfläche ist es vorteilhaft, dass diese über die gesamte Länge des Umlenkbogens 1 konstant bleibt.

Die Mittellinie M des Kurvenabschnittes 4 kann einen konstanten Radius aufweisen. Es handelt sich dabei vorzugsweise um einen 90°-Bogen mit konstantem Radius. Alternativ kann, wie in den Figuren gezeigt, die Mittellinie M des Kurvenabschnittes 4 einen variablen Radius aufweisen. Von der Figur 4 wird beispielsweise gezeigt, dass der Radius der Mittellinie M zwischen dem ersten Rohrabschnitt 3 und dem zweiten Rohrabschnitt 7 kontinuierlich grösser wird. Die Krümmung wird also zwischen dem ersten Rohrabschnitt 3 und im zweiten Rohrabschnitt 7 kleiner. Hierdurch kann ebenfalls eine strömungstechnische Optimierung erreicht werden.

Weiter ist im ersten Rohrabschnitt 2 an der Innenseite ein Strömungsteiler 16 angeordnet. Der Strömungsteiler 16 dient dazu, die Wandströmung oder Filmströmung des Strömungsmediums S entlang der Innenwand, aufzureissen. Der Strömungsteiler 16 ist als Erhebung angeordnet und erstreckt sich hier von der Innenwand 17 des Rohrabschnittes 3. Der Strömungsteiler 16 ist gegenüberliegend zur Kurvenaussenseite 5 angeordnet, sodass das Strömungsmedium S von der Kurveninnenseite 6 auf die Kurvenaussenseite 5 und den dort angeordneten Führungselement 8 zuleitbar ist. Dieser Effekt des Strömungsteilers 16 wird in der Figur 2 gezeigt.

Der Strömungsteiler 16 kann Teil der Fallleitung 2 oder Teil des ersten Rohrabschnittes 3 sein.

Der Strömungsteiler 16 kann verschiedenartig ausgebildet sein. Besonders bevorzugt ist der Strömungsteiler gemäss der EP 1 882 786 ausgebildet.

**BEZUGSZEICHENLISTE**

| | | | |
|---|---|---|---|
| 1 | Umlenkbogen | M2 | zweite Mittelachse |
| 2 | Fallleitung | M | Mittellinie |
| 3 | erster Rohrabschnitt | | |
| 4 | Kurvenabschnitt | S | Strömungsmedium |
| 5 | Kurvenaussenseite | | |
| 6 | Kurveninnenseite | | |
| 7 | zweiter Rohrabschnitt | | |
| 8 | Führungselement | | |
| 9 | Führungswand | | |
| 10 | Einlassbereich | | |
| 11 | Auslassbereich | | |
| 12 | Einbuchtung | | |
| 13 | Kanal | | |
| 14 | Kanalgrund | | |
| 15 | Aufweitung | | |
| 16 | Strömungsteiler | | |
| 17 | Innenwand | | |
| 18 | Führungsbereich | | |
| 19 | Oberkante | | |
| 21 | Wand | | |
| 22 | Innenraum | | |
| 23 | Zwischenraum | | |
| 24 | konkave Krümmung | | |
| | | | |
| M1 | erste Mittelachse | | |

## Patentansprüche

1. Umlenkbogen (1) für eine Fallleitung (2) zum Abführen eines mehrphasigen Strömungsmediums (S), insbesondere aus Wasser, Feststoffen und Luft, umfassend
einen ersten Rohrabschnitt (3), der sich entlang einer ersten Mittelachse (M1) erstreckt,
einen sich an diesen ersten Rohrabschnitt (3) anschliessenden Kurvenabschnitt (4), der sich entlang einer gekrümmten Mittellinie (M) erstreckt mit einer Kurvenaussenseite (5) und einer Kurveninnenseite (6), und
einen sich dem Kurvenabschnitt (4) anschliessenden zweiten Rohrabschnitt (7), der sich entlang einer zweiten Mittelachse (M2) erstreckt,
wobei die zweite Mittelachse (M2) winklig geneigt zur ersten Mittelachse (M1) steht und der Winkel zwischen der ersten und der zweiten Mittelachse (M1, M2) zwischen 91° und 95° ist, und/oder wobei der Umlenkbogen einstückig ausgebildet ist,
wobei mit einem innenseitig auf der Kurvenaussenseite (5) angeordneten Führungselement (8) die Querschnittsform des Kurvenabschnittes (4) derart verändert ist, dass eine Bewegung des Strömungsmediums (S), insbesondere des Wassers und der Feststoffe, quer zur Fliessrichtung unterdrückbar, insbesondere verhinderbar, ist,
wobei das Führungselement (8) mindestens eine im Bereich des Kurvenabschnittes (4) angeordnete Führungswand (9) ist, wobei die Führungswand (9) im Wesentlichen in Fliessrichtung orientiert ist, wobei sich das Führungselement (8) bzw. die Führungswand (9) vollständig über den Kurvenabschnitt (4) erstreckt, und
wobei im ersten Rohrabschnitt an der Innenseite ein Strömungsteiler (16) angeordnet ist, der die Filmströmung des Strömungsmediums, insbesondere des Wassers, aufreisst.

2. Umlenkbogen (1) nach Anspruch 1, **dadurch gekennzeichnet, dass** genau zwei der besagten Führungswände (9) beabstandet zueinander angeordnet sind.

3. Umlenkbogen (1) nach Anspruch 2, **dadurch gekennzeichnet, dass** in Fliessrichtung gesehen die beiden Führungswände (9) einen Einlassbereich (10) aufweisen, in welchem der Abstand zwischen den Führungswänden (9) in Fliessrichtung gesehen verengt wird, und/oder dass die beiden Führungswände (9) einen Führungsbereich aufweisen, in welchem der Abstand zwischen den Führungswänden (9) konstant ist und/oder dass in Fliessrichtung gesehen die beiden Führungswände (9) einen Auslassbereich (11) aufweisen, in welchem der Abstand in Fliessrichtung gesehen vergrössert wird.

4. Umlenkbogen (1) nach einem der vorhergehenden Ansprüche, **dadurch gekennzeichnet, dass** die mindestens eine Führungswand (9) mindestens abschnittsweise parallel zu einer Ebene (E) liegt, welche durch die erste Mittelachse (M1) und die zweite Mittelachse (M2) verläuft.

5. Umlenkbogen (1) nach einem der vorhergehenden Ansprüche, **dadurch gekennzeichnet, dass** die Führungswand (9) durch eine Einbuchtung (12) von aussen im Bereich der Kurvenaussenseite (5) bereitgestellt wird, wobei die Einbuchtung (12) vorzugsweise beidseitig bezüglich einer Ebene (E) liegt, welche durch die erste Mittelachse (M1) und die zweite Mittelachse (M2) verläuft.

6. Umlenkbogen (1) nach einem der vorhergehenden Ansprüche, **dadurch gekennzeichnet, dass** zwei Führungswände (9) vorgesehen sind, wobei die besagten Führungswände (9) einen Kanal (13) bilden, wobei der Kanal (13) einen Kanalgrund (14) aufweist, von welchem die Führungswände (9) sich in Richtung der Kurveninnenseite (6) erstrecken, und wobei der Kanal (13) gegenüber des Kanalgrundes (14) in Richtung Kurveninnenseite (6) offen ist.

7. Umlenkbogen (1) nach Anspruch 6, **dadurch gekennzeichnet, dass** sich die Kanaltiefe über die Länge des Kanals (13) in einem Einlassbereich (10) in Fliessrichtung gesehen vergrössert und einem Auslassbereich (11) in Fliessrichtung gesehen verkleinert und/oder
dass sich die Kanalquerschnittsfläche über die Länge des Kanals (13) in einem Einlassbereich (10) in Fliessrichtung gesehen vergrössert und einem Auslassbereich (11) in Fliessrichtung gesehen verkleinert.

8. Umlenkbogen (1) nach Anspruch 6 oder 7, **dadurch gekennzeichnet, dass** der Kanalgrund (14) im Querschnitt zur Mittellinie des Kurvenabschnittes (4) gesehen konkav gekrümmt ausgebildet ist, wobei der Radius der besagten konkaven Krümmung vorzugsweise grösser ist als der Radius der gegenüberliegenden Wand (21) der Kurveninnenseite (6).

9. Umlenkbogen (1) nach einem der vorhergehenden Ansprüche, **dadurch gekennzeichnet, dass** der Kurvenabschnitt (4) auf der Kurveninnenseite (6) mit einer Aufweitung (15) ausgebildet ist, mit welcher Aufweitung eine allfällige Querschnittsveränderung aufgrund des Führungselementes (8) kompensiert wird.

10. Umlenkbogen (1) nach einem der vorhergehenden Ansprüche, **dadurch gekennzeichnet, dass** der erste Rohrabschnitt (3) und/oder der zweite Rohrabschnitt (7) einen kreiszylindrischen Querschnitt aufweisen.

11. Umlenkbogen (1) nach einem der vorhergehenden Ansprüche, **dadurch gekennzeichnet, dass** die Mittellinie des Kurvenabschnittes (4) einen konstanten Radius aufweist, oder dass die Mittellinie des Kurvenabschnittes (4) einen variablen Radius aufweist, wobei sich der Radius zwischen dem ersten Rohrabschnitt (3) und dem zweiten Rohrabschnitt (7) kontinuierlich vergrössert.

12. Umlenkbogen (1) nach einem der vorhergehenden Ansprüche, **dadurch gekennzeichnet, dass** der Strömungsteiler (16) als Erhebung von der Innenwand (17) des ersten Rohrabschnittes (3) ausgebildet ist, und/oder dass der Strömungsteiler (16) gegenüberliegend zur Kurvenaussenseite (5) angeordnet ist, so dass das Strömungsmedium (S) von der Kurveninnenseite (6) auf die Kurvenaussenseite (5) und dem dort angeordneten Führungselement (8) zuleitbar ist.

## Claims

1. Deflecting bend (1) for a downpipe (2) for the discharge of a multiphase flow medium (S), in particular consisting of water, solids and air, comprising
a first pipe section (3), which extends along a first center axis (M1),
a curved section (4), which adjoins this first pipe section (3) and extends along a curved center line (M) with a curve outer side (5) and a curve inner side (6), and
a second pipe section (7), which adjoins the curved section (4) and extends along a second center axis (M2),
wherein the second center axis (M2) is inclined at an angle to the first center axis (M1) and the angle between the first and the second center axis (M1, M2) lies between 91° to 95°, and/or wherein the deflecting bend is configured in one piece,
wherein, with a guide element (8) arranged on the inside on the curve outer side (5), the cross-sectional shape of the curved section (4) is altered such that a movement of the flow medium (S), in particular of the water and of the solids, transversely to the flow direction is suppressible, in particular preventable,
wherein the guide element (8) is at least one guide wall (9) disposed in the region of the curved section (4), wherein the guide element (8) or the guide wall (9), respectively is oriented substantially in the flow direction, wherein the guide element (8) or the guide wall (9), respectively, extends fully over the curved section (4), and
wherein in the first pipe section, on the inner side, is arranged a flow divider (16), which ruptures the film flow of the flow medium, in particular of the water.

2. The deflecting bend (1) as claimed in 1, **characterized in that** precisely two of said guide walls (9) are arranged at a distance to one another.

3. The deflecting bend (1) as claimed in claim 2, **characterized in that** the two guide walls (9), viewed in the flow direction, have an inlet region (10) in which the distance between the guide walls (9), viewed in the flow direction, is narrowed, and/or **in that** the two guide walls (9) have a guide region in which the distance between the guide walls (9) is constant, and/or **in that**, viewed in the flow direction, the two guide walls (9) have an outlet region (11) in which the distance to one another, viewed in the flow direction, is enlarged.

4. The deflecting bend (1) as claimed in one of the preceding claims, **characterized in that** the at least one guide wall (9) lies at least in some sections parallel to a plane (E) which runs through the first center axis (M1) and the second center axis (M2).

5. The deflecting bend (1) as claimed in one of the preceding claims, **characterized in that** the guide wall (9) is provided by an indentation (12) from outside in the region of the curve outer side (5), wherein the indentation (12) lies preferably on both sides of a plane (E) which runs through the first center axis (M1) and the second center axis (M2).

6. The deflecting bend (1) as claimed in one of the preceding claims, **characterized in that** said mutually spaced guide walls (9) form a channel (13), wherein the channel (13) has a channel bottom (14) from which the guide walls (9) extend in the direction of the curve inner side (6), and wherein the channel (13) is open opposite the channel bottom (14), in the direction of the curve inner side (6).

7. The deflecting bend (1) as claimed in claim 6, **characterized in that** the channel depth increases over the length of the channel (13), viewed in the flow direction, in an inlet region (10), and diminishes, viewed in the flow direction, in an outlet region (11) and/or
**in that** the channel cross-sectional area increases over the length of the channel (13), viewed in the flow direction, in an inlet region (10), and diminishes, viewed in the flow direction, in an outlet region (11).

8. The deflecting bend (1) as claimed in claim 6 or 7, **characterized in that** the channel bottom (14), viewed in the cross section to the center line of the curved section (4), is of concavely curved configuration, wherein the radius of said concave curvature is preferably larger than the radius of the opposite wall (21) of the curve inner side (6).

9. The deflecting bend (1) as claimed in any one of the preceding claims, **characterized in that** the curved section (4) is configured on the curve inner side (6) with a widening (15), with which widening any change in cross section due to the guide element (8) is compensatable.

10. The deflecting bend (1) as claimed in any one of the preceding claims, **characterized in that** the first pipe section (3) and/or the second pipe section (7) have a circular-cylindrical cross section.

11. The deflecting bend (1) as claimed in any one of the preceding claims, **characterized in that** the center line of the curved section (4) has a constant radius, or **in that** the center line of the curved section (4) has a variable radius, wherein the radius continuously increases between the first pipe section (3) and the second pipe section (7).

12. The deflecting bend (1) as claimed in one of the preceding claims, **characterized in that** the flow divider (16) is configured as an elevation of the inner wall (17) of the first pipe section (3), and/or **in that** the flow divider (16) is arranged opposite the curve outer side (5), so that the flow medium (S) can be fed from the curve inner side (6) to the curve outer side (5), and to the guide element (8) arranged there.

## Revendications

1. Un coude de déviation (1) pour une colonne de chute (2), pour l'évacuation d'un milieu d'écoulement multiphase (S), en particulier d'eau, de matières solides et d'air, comprenant
une première section de tuyau (3), s'étendant le long d'un premier axe médian (M1),
une section en courbe (4), raccordée à cette première section de tuyau (3), qui s'étend le long d'une ligne médiane en courbe (M), présentant une partie extérieure de courbe (5) et une partie intérieure de courbe (6), et
une deuxième section de tuyau (7), raccordée à la section en courbe (4), qui s'étend le long d'un deuxième axe médian (M2),
où le deuxième axe médian (M2) est incliné d'un angle par rapport au premier axe médian (M1) et l'angle entre le premier et le deuxième axe médian (M1, M2) est entre 91° et 95°, et/ou le coude de déviation est réalisé en une pièce,
où, au moyen d'un élément de guidage (8) disposé, côté intérieur, sur la partie extérieure de courbe (5), la forme de la section transversale de la section en courbe (4) est modifiée de telle façon qu'un mouvement du milieu d'écoulement (S), en particulier de l'eau et des matières solides, peut être diminué, en particulier empêché transversalement à la direction d'écoulement,
où l'élément de guidage (8) est au moins une paroi de guidage (9) disposée dans la zone de la section en courbe (4), la paroi de guidage (9) étant orientée essentiellement dans la direction de l'écoulement, où l'élément de guidage (8) respectivement la paroi de guidage (9) s'étendent complètement sur la section en courbe (4), et
où un diviseur de débit (16) est disposé sur le côté intérieur dans la première section de tuyau, qui déchire l'écoulement en film du milieu d'écoulement, en particulier de l'eau,

2. Coude de déviation (1) selon la revendication 1, **caractérisé en ce qu'**exactement deux desdites parois de guidage (9) sont disposées de manière espacée l'une par rapport à l'autre.

3. Coude de déviation (1) selon la revendication 2, **caractérisé en ce que**, vu dans la direction de l'écoulement, les deux parois de guidage (9) présentent une zone d'entrée (10) dans laquelle la distance entre les parois de guidage (9) est diminuée dans la direction de l'écoulement, et / ou que les deux parois de guidage (9) ont une zone de guidage dans laquelle la distance entre les parois de guidage (9) est constante et/ou vu dans la direction de l'écoulement, les deux parois de guidage (9) présentent une zone de sortie (11) dans laquelle la distance est augmentée dans la direction de l'écoulement.

4. Coude de déviation (1) selon une des revendications précédentes, **caractérisée en ce que** l'au moins une paroi de guidage (9) se situe, au moins par sections, en parallèle à un plan (E) qui traverse le premier axe central (M1) et le deuxième axe central (M2).

5. Coude de déviation (1) selon une des revendications précédentes, **caractérisé en ce que** la paroi de guidage (9) est assurée par une empreinte (12) de l'extérieur dans la partie extérieure de courbe (5), l'empreinte (12) se situant de préférence des deux côtés par rapport à un plan (E), lequel traverse le premier axe central (M1) et le deuxième axe central (M2).

6. Coude de déviation (1) selon une des revendications précédentes, **caractérisé en ce que** deux parois de guidage (9) sont prévues, où lesdites parois de guidage (9) forment un canal (13), où le canal (13) présente une base de canal (14) à partir de laquelle les parois de guidage (9) s'étendent en direction de la partie intérieure de courbe (6) et où le canal (13) est ouvert par rapport à la base du canal (14) en direction de la partie intérieure de courbe (6).

7. Coude de déviation (1) selon la revendication 6, **caractérisé en ce que** la profondeur du canal augmente sur la longueur du canal (13) dans une zone d'entrée (10), vu dans le sens d'écoulement, et diminue dans une zone de sortie (11), vu dans le sens d'écoulement, et /
ou
**en ce que** sur la longueur du canal (13), la surface de la section transversale du canal, vu dans le sens d'écoulement, augmente dans une zone d'entrée (10) et, vu dans le sens d'écoulement, diminue dans une zone de sortie (11).

8. Coude de déviation (1) selon la revendication 6 ou 7, **caractérisée en ce que** la base de canal (14), vue en section transversale par rapport à la ligne médiane de la section en courbe (4), est réalisée en ayant une courbure concave, où le rayon de ladite courbure concave est de préférence plus grand que le rayon de la paroi opposée (21) de la partie intérieure de courbe (6).

9. Coude de déviation (1) selon une des revendications précédentes, **caractérisé en ce que** la section en courbe (4) sur la partie intérieure de courbe (6) est formée avec un agrandissement (15), avec lequel agrandissement tout changement de section transversale dû à l'élément de guidage (8) est compensé.

10. Coude de déviation (1) selon une des revendications précédentes, **caractérisé en ce que** la première section de tuyau (3) et/ou la deuxième section de tuyau (7) ont une section transversale cylindrique circulaire.

11. Coude de déviation (1) selon une des revendications précédentes, **caractérisé en ce que** la ligne médiane de la section en courbe (4) possède un rayon constant, ou que la ligne médiane de la section en courbe (4) possède un rayon variable, où le rayon entre la première section de tuyau (3) et la deuxième section de tuyau (7) augmente de façon continue.

12. Coude de déviation (1) selon une des revendications précédentes, **caractérisé en ce que** le diviseur de débit (16) est conçu comme bosse par rapport à la paroi intérieure (17) de la première section de tuyau (3), et/ou **en ce que** le diviseur de débit (16) est agencé en opposé à la partie extérieure de courbe (5), de sorte que le milieu d'écoulement (S) peut être acheminé depuis la partie intérieure de courbe (6) vers la partie extérieure de courbe (5) et l'élément de guidage (8) disposé à cet endroit.
